# EUROPÄISCHE PATENTANMELDUNG

(11) **EP 4 443 610 A1**
(43) Veröffentlichungstag der Anmeldung: **09.10.2024**
(21) Anmeldenummer: 24161741.4
(22) Anmeldetag: 06.03.2024
(51) Int. Cl.: H01M 10/625, H01M 10/6554, H01M 50/242, H01M 50/249, H01M 10/647, H01M 10/6556

(54) **VORRICHTUNG ZUR LAGERUNG UND TEMPERIERUNG MEHRERER BATTERIEZELLEN**

(30) Priorität: 31.03.2023 DE 102023108269
(71) Anmelder: MAN Truck & Bus SE, 80995 München (DE)
(72) Erfinder: Zemczak, Franco, 80995 Munich (DE); Sippl, Christian, 80995 München (DE); Boehme, Ulrich, 80995 Munich (DE)

(57) **Zusammenfassung**

Die Erfindung betrifft eine Vorrichtung (10) zur Lagerung und Temperierung mehrerer Batteriezellen. Die Vorrichtung (10) umfasst ein Gehäuse (12) zur Aufnahme der mehreren Batteriezellen, eine Temperierplatte (14) zur Temperierung der mehreren Batteriezellen und mindestens eine Anbindungseinrichtung (16), die das Gehäuse (12) und die Temperierplatte (14) miteinander verbindet. Die Vorrichtung (10) weist ferner ein Klemmelement (18) auf, das an der mindestens eine Anbindungseinrichtung (16) angeordnet ist und die Temperierplatte (14) mit einer Klemmkraft beaufschlagt.

## Beschreibung

Die Erfindung betrifft eine Vorrichtung zur Lagerung und Temperierung mehrerer Batteriezellen sowie einen elektrischen Energiespeicher und ein Kraftfahrzeug mit jeweils einer solchen Vorrichtung.

Elektrische Energiespeicher für Kraftfahrzeuge sind im Stand der Technik grundsätzlich bekannt. Derartige Energiespeicher bestehen üblicherweise aus einem Gehäuse, in dem eine Vielzahl elektrisch miteinander verschalteter bzw. verschaltbarer Batteriezellen aufgenommen ist. Damit die Batteriezellen langfristig optimal funktionieren, müssen diese in der Regel thermisch konditioniert, d. h. gekühlt bzw. beheizt, werden.

Zum thermischen Konditionieren der Batteriezellen, können diese bspw. auf eine Temperierplatte mit einer Kanalstruktur, durch die ein flüssiger Wärmeträger strömt, positioniert werden (sog. Bodenplattenkühlung). Die Anbindung derartiger Temperierplatten an einem Gehäuse des Energiespeichers ist jedoch üblicherweise hohen mechanischen Belastungen ausgesetzt, insbesondere durch Vibrationen und/oder Torsionen des Fahrzeugs und/oder durch thermisch bedingte Dimensionsänderungen der Temperierplatte. Dies kann zu Schäden an der Anbringung bzw. der Temperierplatte führen.

Aufgabe der Erfindung ist es, eine verbesserte Lösung zur Lagerung und Temperierung von Batteriezellen bereitzustellen. Bevorzugt ist es eine Aufgabe der Erfindung, eine insbesondere verschleißarme Möglichkeit zur Lagerung und Temperierung von Batteriezellen bereitzustellen.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Ein erster unabhängiger Aspekt der vorliegenden Offenbarung betrifft eine Vorrichtung. Bevorzugt dient die Vorrichtung zur Lagerung und/oder Temperierung mehrerer Batteriezellen (z. B. Lithium-Ionen-Batteriezellen). Beispielsweise kann es sich bei der Vorrichtung um eine Vorrichtung für ein Kraftfahrzeug bzw. um eine Vorrichtung zur Anbringung an einem Kraftfahrzeug handeln.

Die Vorrichtung weist ein (z. B. rahmenförmiges) Gehäuse (z. B. aus einer Metalllegierung) auf. Das Gehäuse kann bspw. rechteckrahmenförmig sein und/oder einen geschlossenen, mehrseitigen (z. B. vierseitigen) Rahmen bilden.

Weiterhin weist die Vorrichtung eine Temperierplatte (z. B. eine Kühl- und/oder Heizplatte) zur Temperierung (z. B. zum Kühlen und/oder Heizen) der Batteriezellen auf. Die Temperierplatte kann z. B. aus Aluminium sein und/oder eine (z. B. mäanderförmige) Kanalstruktur zur Führung eines (z. B. flüssigen) Temperiermediums aufweisen. Die mehrere Batteriezellen können bspw. bodenseitig auf der Temperierplatte positionierbar und/oder befestigbar sein.

Ferner weist die Vorrichtung mindestens eine Anbindungseinrichtung (z. B. eine Verschraubungseinrichtung) auf, die das Gehäuse und die Temperierplatte (z. B. lösbar) miteinander verbindet. Lediglich beispielhaft können das Gehäuse und die Temperierplatte über die mindestens eine Anbindungseinrichtung miteinander verschraubt sein. Bevorzugt ist die mindestens eine Anbindungseinrichtung dabei (zumindest abschnittsweise) zwischen dem Gehäuse und der Temperierplatte angeordnet.

Weiterhin weist die Vorrichtung ein (z. B. elastisches, insbesondere federelastisches und/oder gummielastisches) Klemmelement auf. In einer bevorzugten Ausführung kann das Klemmelement bspw. als eine (insbesondere metallische) Federung, z. B. eine Tellerfeder oder ein Paket aus Tellerfedern, ausgebildet sein. Das Klemmelement ist dabei an der mindestens eine Anbindungseinrichtung (z. B. zwischen der mindestens einen Anbindungseinrichtung und der Temperierplatte) angeordnet. Hierbei ist vorgesehen, dass das Klemmelement die Temperierplatte (z. B. mittelbar oder unmittelbar) mit einer (z. B. vorbestimmten, insbesondere zuvor festgelegten) Klemmkraft beaufschlagt. Beispielsweise kann das Klemmelement gegen die Temperierplatte (mit der Klemmkraft) drücken, zweckmäßig mittelbar oder unmittelbar. Durch ein entsprechendes Auslegen der Klemmkraft bzw. des Klemmelements kann, wie im Folgenden noch im Detail beschrieben werden wird, auf vorteilhafte Weise eine sichere Halterung der Temperierplatte bzw. der mit der Temperierplatte verbundenen Batteriezellen im Gehäuse (z. B. auch bei durch einen Fahrzeugmotor und/oder durch Fahrbewegungen des Fahrzeugs erzeugten Vibrationen) ermöglicht werden, während mechanische Belastungen durch Torsion und/oder thermische Dimensionsänderungen der Temperierplatte (z. B. durch ein kurzes Rutschen der Temperierplatte) reduziert bzw. vermieden werden können.

Gemäß einem ersten Aspekt ist es möglich, dass die Temperierplatte (zweckmäßig im Betrieb der Vorrichtung) z. B. thermische Dimensionsänderungen in Abhängigkeit ihrer Temperatur aufweist und/oder Vibrationen und/oder Torsion unterworfen wird.

Beispielsweise kann sich die Temperierplatte in Abhängigkeit der Temperatur der Temperierplatte ausdehnen und/oder zusammenziehen. Grundsätzlich können die insbesondere thermischen Dimensionsänderungen in allen drei Raumrichtungen auftreten. Bevorzugt soll die Temperierplatte allerdings (vorwiegend) innerhalb einer Erstreckungsebene (bzw. Plattenebene) der Temperierplatte insbesondere thermische Dimensionsänderungen in Abhängigkeit der Temperatur der Temperierplatte aufweisen.

Weiterhin kann die Vorrichtung ausgebildet sein, mittels des Klemmelements insbesondere thermische Dimensionsänderungen (insbesondere thermische Dimensionsänderungen innerhalb einer Erstreckungsebene der Temperierplatte) und/oder Torsion der Temperierplatte (zweckmäßig zumindest teilweise) zu kompensieren (z. B. um dadurch Verspannungen und/oder Belastungen der Temperierplatte vorteilhaft abzubauen).

Zudem oder alternativ kann die Vorrichtung ausgebildet sein, mittels des Klemmelements Bewegungen (z. B. thermische Dimensionsänderungen) der Temperierplatte, vorzugsweise innerhalb einer Erstreckungsebene der Temperierplatte, (zweckmäßig zumindest teilweise) zuzulassen (z. B. um dadurch Verspannungen und/oder Belastungen der Temperierplatte vorteilhaft abzubauen). Bevorzugt kann die Vorrichtung somit ausgebildet sein, über das Klemmelement ein (z. B. reversibles und/oder kurzzeitiges) Bewegen (z. B. ein Rutschen) der Temperierplatte (z. B. innerhalb der Erstreckungsebene) relativ zum Gehäuse zu ermöglichen. Beispielsweise kann die Vorrichtung ausgebildet sein, ein Bewegen der Temperierplatte bei einem Überschreiten einer vorbestimmten mechanischen Belastung auf die mindestens eine Anbindungseinrichtung und/oder auf das Klemmelement (z. B. infolge eines Verspannens der Temperierplatte) zu ermöglichen. Auf vorteilhafte Weise können dadurch Verspannungen abgebaut werden, bspw. durch ein kurzzeitiges Rutschen der Temperierplatte in eine leicht veränderte Einbaulage. Dies hat den Vorteil, dass hohe mechanische Beanspruchungen an der entsprechenden Anbindungsstelle der Temperierplatte, insbesondere durch thermische Veränderungen der Temperierplattendimensionen, möglichst vermieden bzw. reduziert werden können.

Nach einem weiteren Aspekt kann das Klemmelement die Temperierplatte (z. B. kraftschlüssig) verklemmen. Bevorzugt dient dies zur Fixierung der Temperierplatte am Gehäuse. Beispielsweise kann sich das Klemmelement dazu an der Temperierplatte unmittelbar oder mittelbar (federnd) abstützen. Vorzugsweise übt das Klemmelement dabei eine Klemmkraft auf die Temperierplatte aus, die senkrecht zu einer Erstreckungsebene (bzw. Plattenebene) der Temperierplatte orientiert ist.

Gemäß einem weiteren Aspekt kann das Klemmelement zwischen der Temperierplatte und der mindestens einen Anbindungseinrichtung (z. B. unter Vorspannung) eingespannt sein (zweckmäßig mittelbar oder unmittelbar). Beispielsweise kann sich das Klemmelement dabei mit einem seiner Enden an der Temperierplatte (federnd) abstützen und mit einem anderen seiner Enden an der mindestens einen Anbindungseinrichtung (federnd) abstützen. Zudem oder alternativ kann das Klemmelement auch zwischen der Temperierplatte und dem Gehäuse (z. B. unter Vorspannung) eingespannt sein (zweckmäßig mittelbar oder unmittelbar).

Nach einem weiteren Aspekt kann das Klemmelement durch eine (z. B. senkrecht zu einer Erstreckungsebene der Temperierplatte wirkende) Krafteinwirkung zusammendrückbar sein. Beispielsweise kann das Klemmelement durch die entsprechende Krafteinwirkung in eine abgeflachte Form überführbar sein. Bevorzugt dient dies zum Überwinden einer bzw. der Verklemmung und/oder zum Ermöglichen einer Bewegung der Temperierplatte innerhalb einer Erstreckungsebene der Temperierplatte. Dadurch auf vorteilhafte Weise eine Halterung der Temperierplatte bereitgestellt werden, die einerseits eine Fixierung der Temperierplatte erlaubt, zugleich aber Bewegungen der Temperierplatte in der Plattenebene (z. B. zum Abbau von Verspannungen) ermöglicht.

Gemäß einem weiteren Aspekt kann das Klemmelement ausgebildet sein, bei einem Erreichen eines vorbestimmten (z. B. ersten) Klemmkraftwerts (z. B. reversibel) verformbar (z. B. flachdrückbar) zu sein. Beispielsweise kann das Klemmelement ausgebildet sein, bei einem Erreichendes entsprechenden Klemmkraftwerts (z. B. elastisch) seine Form zu verändern. Bevorzugt dient dies zum Reduzieren der Klemmkraft (mit der die Temperierplatte beaufschlagt ist) und/oder zum Ermöglichen einer Bewegung der Temperierplatte innerhalb einer Erstreckungsebene der Temperierplatte. Insgesamt kann auch dadurch wiederum auf vorteilhafte Weise eine Halterung der Temperierplatte bereitgestellt werden, die einerseits eine Fixierung der Temperierplatte erlaubt, zugleich aber Bewegungen der Temperierplatte in der Plattenebene (z. B. zum Abbau von Verspannungen) ermöglicht.

Nach einem weiteren Aspekt kann das Klemmelement eine (insbesondere metallische) Federung umfassen. Beispielsweise kann das Klemmelement als (z. B. scheibenförmige) Biegefeder ausgebildet sein. Alternativ kann das Klemmelement z. B. auch aus einem elastischen Material wie z. B. einem Gummi-Material, einem Elastomer-Material und/oder einem Thermoplast-Material etc. hergestellt sein.

Gemäß einem weiteren Aspekt kann das Klemmelement vorgespannt sein. Beispielseise kann das Klemmelement unter Druckspannung in der Vorrichtung gehalten sein.

Nach einem weiteren Aspekt kann das Klemmelement zumindest eine Tellerfeder aufweisen. Bevorzugt umfasst die zumindest eine Tellerfeder mehrere (z. B. neun) Tellerfedern. Die mehreren Tellerfedern können dabei z. B. hintereinander angeordnet sein. Zudem oder alternativ können die mehreren Tellerfedern parallel (bzw. in einer Parallelschaltung), seriell (bzw. in einer Reihenschaltung), und/oder seriell parallel (bzw. in einer Reihen- und Parallelschaltung) angeordnet sein. Zudem oder alternativ können mehreren Tellerfedern auch einen Tellerfederstapel bilden bzw. als ein Tellerfederstapel gruppiert sein. Bspw. können die mehreren Tellerfedern innerhalb des Tellerfederstapels parallel, seriell und/oder seriell parallel gestapelt sein. Der Tellerfederstapel kann ferner z. B. ein Tellerfederpaket aus mehreren(z. B. drei) parallel (z. B. übereinander) angeordneten Tellerfedern umfassen. Nach einem weiteren Aspekt kann die mindestens eine Anbindungseinrichtung ein Verbindungselement (z. B. eine Schraube) aufweisen, über das die Temperierplatte an dem Gehäuse angebunden (z. B. verschraubt) ist. Das Verbindungselement kann ein erstes Ende, das z. B. in einem Wandungsabschnitt des Gehäuses aufgenommen sein kann, und ein zweites Ende, das z. B. ein Schraubenkopf aufweist, umfassen. Weiterhin kann sich das Verbindungselement durch eine Durchgangsöffnung der Temperierplatte erstrecken. Auf vorteilhafte Weise kann dadurch eine einfache und sichere Anbindung der Temperierplatte an das Gehäuse sichergestellt werden.

Gemäß einem weiteren Aspekt kann das Verbindungselement (z. B. vorzugsweise umfangsseitig und/oder koaxial) zumindest abschnittsweise von dem Klemmelement umgeben sein. Beispielsweise kann das (z. B. in Form einer Tellerfeder ausgeführte) Klemmelement eine zentrale Öffnung aufweisen, durch die sich das Verbindungselement erstreckt.

Nach einem weiteren Aspekt kann das Klemmelement die Temperierplatte gegen das Verbindungselement (z. B. gegen einen Schraubenkopf des Verbindungselements) drücken. Beispielsweise kann das Klemmelement die Temperierplatte (mittelbar oder unmittelbar) gegen das Verbindungselement (z. B. gegen einen Schraubenkopf des Verbindungselements) drücken bzw. pressen. Entsprechend kann die Temperierplatte zwischen dem Klemmelement und dem Verbindungselement (z. B. dessen zweiten Ende) eingeklemmt sein. Vorzugsweise dient das (z. B. als Schraube ausgeführte) Verbindungselement nicht unmittelbar dazu, die Temperierplatte z. B. kraftschlüssig zu fixieren. Diese Aufgabe übernimmt vielmehr bevorzugt das Klemmelement z. B. in einem Nebenschluss. Auf vorteilhafte Weise kann dadurch eine Abstützung bzw. (zweckmäßig kraftschlüssige) Fixierung der Temperierplatte ermöglicht werden, während zudem ein selbstständiges Lösen des Verbindungselements durch eine gleichbleibende Klemmkraft vorteilhaft möglichst vermieden werden kann.

Gemäß einem weiteren Aspekt kann die Temperierplatte eine Durchgangsöffnung (z. B. eine Bohrung, Aussparung und/oder ein Loch) aufweisen, durch die sich das Verbindungselement erstreckt. Beispielsweise kann das Verbindungselement durch die Durchgangsöffnung geführt und/oder in dieser aufgenommen sein. Bevorzugt kann hierbei vorgesehen sein, dass zwischen einem Rand der Durchgangsöffnung und einem sich durch die Durchgangsöffnung erstreckenden Abschnitt des Verbindungselements ein Freiraum (z. B. eine Lücke) angeordnet ist. Beispielsweise kann ein Außendurchmesser des sich durch die Durchgangsöffnung erstreckenden Abschnitts des Verbindungselements kleiner als ein (Innen-)Durchmesser der Durchgangsöffnung sein. Vorzugsweise dient der Freiraum zur Kompensation thermischer Dimensionsänderungen und/oder Torsion der Temperierplatte (innerhalb einer Erstreckungsebene). Beispielsweise kann mittels des Freiraums ein (definierter) Bewegungsspielraums für die Temperierplatte innerhalb einer Erstreckungsebene der Temperierplatte vorgegeben werden. Auf vorteilhafte Weise können dadurch thermische und/oder mechanische Verspannungen im Bereich der Anbindungseinrichtung vermieden werden.

Nach einem weiteren Aspekt kann das Klemmelement ausgebildet sein, auf die Temperierplatte eine Klemmkraft entlang einer Klemmrichtung auszuüben. Bevorzugt ist die Klemmrichtung dabei parallel zu einer Längsachse des Verbindungselements orientiert. Als Längsachse kann dabei bspw. die Achse des Verbindungselements verstanden werden, die der Richtung seiner größten Ausdehnung entspricht. Bevorzugt ist die Klemmrichtung dabei senkrecht zur Erstreckungsebene der Temperierplatte orientiert.

Gemäß einem weiteren Aspekt kann das Klemmelement ausgebildet sein, bei einem Erreichen eines vorbestimmten (z. B. zweiten) Klemmkraftwerts teilplastisch verformbar zu sein. Bevorzugt weist das Klemmelement ab dem vorbestimmten Klemmkraftwert somit eine im Wesentlichen waagerechte Spannungs-Dehnungs-Kurve auf. Der Vorteil hiervon ist, dass Klemmkraftschwankungen durch Toleranzen hierdurch minimiert werden können.

Nach einem weiteren Aspekt kann die mindestens eine Anbindungseinrichtung eine Anschlaghülse aufweisen. Durch die Anschlaghülse kann sich das Verbindungselement erstrecken. Beispielsweise kann die Anschlaghülse das Verbindungselement zumindest abschnittsweise (z. B. koaxial) umgeben. Zudem oder alternativ kann die Anschlaghülse (z. B. stirnseitig) eine Anschlagfläche für das Verbindungselement (z. B. für einen Schraubenkopf des Verbindungselements) aufweisen. Bevorzugt stützt sich das Verbindungselement (mittelbar oder unmittelbar) an der Anschlagfläche ab. Hierdurch kann die Anschlaghülse bspw. eine Einschraublänge des Verbindungselements begrenzen. Auf vorteilhafte Weise kann dadurch eine vom Gehäuse beabstandete Anordnung des zweiten Endes des Verbindungselements und damit der Temperierplatte realisiert werden.

Gemäß einem weiteren Aspekt kann die mindestens eine Anbindungseinrichtung eine (z. B. nicht metallische) Zwischenringscheibe (z. B. aus Keramik und/oder faserverstärktem Kunststoff) aufweisen. Die Zwischenringscheibe kann zwischen dem Verbindungselement (z. B. dem Schraubenkopf des Verbindungselements) und der Anschlagsfläche angeordnet sein. Beispielsweise kann die Zwischenringscheibe zwischen dem Verbindungselement und der Anschlagsfläche eingeklemmt sein. Bevorzugt liegt ferner auch die Temperierplatte an der Zwischenringscheibe an. Beispielsweise kann die Temperierplatte zumindest abschnittsweise auf der Zwischenringscheibe aufliegen. Auf vorteilhafte Weise kann dadurch z. B. im Vergleich zum Schraubenkopf des Verbindungselements eine größere Anlagefläche für die Temperierplatte bereitgestellt werden.

Nach einem weiteren Aspekt kann die Anschlaghülse einen (z. B. seitlich von der Hülse abragenden) Absatz aufweisen. Beispielsweise kann der Absatz ein die Anschlaghülse (z. B. umfangsseitig) umlaufender bzw. umgebender Absatz sein. Der Absatz kann z. B. in radialer Richtung von der Anschlaghülse abstehen. Weiterhin kann sich das Klemmelement an dem Absatz abstützen. Beispielsweise kann das Klemmelement zwischen dem Absatz und der Temperierplatte eingespannt sein. Auf vorteilhafte Weise kann dadurch eine definierte Anlagefläche für das Klemmelement bereitgestellt werden.

Gemäß einem weiteren Aspekt kann die Anschlaghülse (z. B. umfangsseitig und/oder koaxial) zumindest abschnittsweise von dem Klemmelement umgeben sein. Beispielsweise kann das (z. B. in Form einer Tellerfeder ausgeführte) Klemmelement eine zentrale Öffnung aufweisen, durch die sich die Anschlaghülse erstreckt.

Nach einem weiteren Aspekt kann das Gehäuse eine Ausnehmung (z. B. eine Vertiefung und/oder Aussparung) aufweisen, in der ein Endbereich der Anschlaghülse (z. B. zumindest abschnittsweise formschlüssig) aufgenommen sein kann. Beispielsweise kann eine Innenkontur der Ausnehmung zumindest abschnittsweise formangepasst zu einer Außenkontur des Endbereichs der Anschlaghülse ausgebildet sein. Auf vorteilhafte Weise kann dadurch eine sichere Fixierung der Anschlaghülse am Gehäuse ermöglicht werden.

Nach einem weiteren Aspekt kann die mindestens eine Anbindungseinrichtung eine (z. B. nicht metallische) Unterlegscheibe (z. B. aus Keramik und/oder faserverstärktem Kunststoff) aufweisen. Die Unterlegscheibe kann zwischen dem Klemmelement und der Temperierplatte angeordnet sein (z. B. um ein Einschneiden des Klemmelements in die Temperierplatte zu verhindern). Beispielsweise kann die Unterlegscheibe zwischen dem Klemmelement und der Temperierplatte eingeklemmt sein. Auf vorteilhafte Weise können dadurch Beschädigungen an der, in der Regel aus Aluminium gefertigten und daher weichen Temperierplatte, vermieden werden.

Gemäß einem weiteren Aspekt kann die mindestens eine Anbindungseinrichtung mehrere - vorzugsweise zumindest drei, zumindest vier, zumindest fünf oder zumindest sechs - Anbindungseinrichtungen aufweisen, die vorzugsweise wie hierin offenbart ausgeführt sein können. Bevorzugt weist die Vorrichtung dabei auch mehrere Klemmelemente auf, wobei an jeder der Anbindungseinrichtungen jeweils eines der mehreren Klemmelemente angeordnet ist. Die mehreren Anbindungseinrichtungen können dabei z. B. alle gleich ausgebildet sein. Entsprechend können die mehreren Anbindungseinrichtungen jeweils die gleichen Komponenten aufweisen. Bevorzugt sind die mehreren Anbindungseinrichtungen hierbei (z. B. umfangsseitig) verteilt an der Temperierplatte angeordnet.

Nach einem weiteren Aspekt kann das Gehäuse mindestens einen (z. B. in einen Innenraum des Gehäuses von dem Gehäuse abragenden) Vorsprung aufweisen, an dem sich die mindestens eine Anbindungseinrichtung abstützen kann. Der mindestens eine Vorsprung kann von einer Wandung des Gehäuses vor- bzw. abstehen. Der mindestens eine Vorsprung kann eine Aufnahmeöffnung (z. B. ein Sackloch) für das Verbindungselement und/oder eine Ausnehmung zur Aufnahme des Endbereichs der Anschlaghülse aufweisen. Im Fall, dass die Vorrichtung mehreren Anbindungseinrichtungen aufweist, kann der mindestens eine Vorsprung auch mehrere Vorsprünge aufweisen. Vorzugsweise ist dabei jeweils eine der mehreren Anbindungseinrichtungen an einem der mehreren Vorsprünge angeordnet. Auf vorteilhafte Weise können dadurch möglichst gut zugängliche Anbringungsstellen für die Montage der Anbindungseinrichtungen bereitgestellt werden.

Gemäß einem weiteren Aspekt kann die Temperierplatte eine (z. B. mäanderförmige) Kanalstruktur zur Führung eines (z. B. flüssigen) Temperiermediums aufweisen. Bevorzugt weist die Temperierplatte ferner mindestens ein Anschlussstück (z. B. einen Anschlussstutzen) auf, über den das Temperiermediums der Kanalstruktur zuführbar und/oder über den das Temperiermediums von Kanalstruktur fortführbar ist.

Ein weiterer unabhängiger Aspekt der vorliegenden Offenbarung betrifft einen elektrischen Energiespeicher (z. B. einen Hochvolt-Energiespeicher) für ein Kraftfahrzeug. Bevorzugt handelt es sich um einen elektrischen Energiespeicher für ein Nutzfahrzeug, wie z. B. einen Lastkraftwagen oder Omnibus. Der elektrische Energiespeicher weist mehrere Batteriezellen (z. B. Lithium-Ionen-Batteriezellen) auf. Beispielsweise kann es sich bei den mehrere Batteriezellen um prismatische Batteriezellen handeln. Die mehrere Batteriezellen können z. B. in Form mehrerer Batteriemodule angeordnet sein. Weiterhin weist der elektrische Energiespeicher eine Vorrichtung, wie in diesem Dokument offenbart ist, auf. Hierbei sind die mehrere Batteriezellen in dem Gehäuse der Vorrichtung aufgenommen. Beispielsweise können die mehrere Batteriezellen auf der Temperierplatte stehend bzw. bodenseitig mit der Temperierplatte verbunden in dem Gehäuse aufgenommen sein. Der elektrische Energiespeicher kann hierbei bspw. als ein Hochvolt-Energiespeicher ausgeführt sein. Der Hochvolt-Energiespeicher kann z. B. mit einer Gleichspannung zwischen 60 V und 1,5 kV, besonders bevorzugt zwischen 400 V und 850 V, betrieben werden bzw. betreibbar sein. Der Energiespeicher kann z. B. Teil einer Traktionsbatterie sein.

Ein weiterer unabhängiger Aspekt der vorliegenden Offenbarung betrifft ein Kraftfahrzeug (z. B. einen Personenkraftwagen oder ein Nutzfahrzeug, insbesondere einen Lastkraftwagen oder einen Omnibus), wobei das Kraftfahrzeug einen elektrischen Energiespeicher, wie in diesem Dokument offenbart ist, und/oder eine Vorrichtung, wie in diesem Dokument offenbart ist, aufweist. Bevorzugt handelt es sich bei dem Kraftfahrzeug dabei um ein Nutzfahrzeug, d. h. ein Kraftfahrzeug, das durch seine Bauart und Einrichtung speziell zum Transport von Gütern, zur Beförderung von Personen und/oder zum Ziehen eines oder mehrerer (z. B. landwirtschaftlicher) Anhängerfahrzeuge ausgelegt ist. Beispielsweise kann das Nutzfahrzeug ein Lastkraftwagen, ein Sattelschlepper, ein Baustellenfahrzeug und/oder eine landwirtschaftliche Maschine (z. B. ein Traktor) sein.

Es ist möglich, dass das Klemmelement (insbesondere die zumindest eine Tellerfeder) vorzugsweise so ausgelegt sein kann, dass deren Klemm- und/oder Haltekraft mindestens so groß ist, um die Temperierplatte grundsätzlich fest am Gehäuse zu fixieren. Sollte sich allerdings die Temperierplatte, z. B. durch Wärmedehnung oder im Torsionslastfall, an der mindestens einen Anbindungseinrichtung (z. B. Verschraubungseinrichtung) verspannen, ist die Klemm- und/oder Haltekraft des Klemmelements bevorzugt so ausgelegt, um ein insbesondere kurzzeitiges Rutschen der Temperierplatte zu erlauben. Das führt wiederum vorteilhaft zum Abbau von Spannungen. Das Klemmelement (insbesondere die zumindest eine Tellerfeder) kann sich dabei vorzugsweise rein im elastischen Verformungsbereich befinden.

Ein selbstständiges Lösen des Verbindungselements (insbesondere der Schraube) ist vorteilhaft nicht möglich, da dieses im Hauptschluss mit der Anschlaghülse bzw. dem Gehäuse (zweckmäßig jederzeit) vorzugsweise die gleiche Klemmkraft aufweist, welche durch die Betriebskräfte der Temperierplatte nicht beeinflusst wird. Die Temperierplatte wiederum wird vorzugsweise mittels des an dem Verbindungselement angeordneten Klemmelement (z. B. in Form mehrerer Tellerfedern) im Nebenschluss geklemmt und/oder gehaltert.

Zu erwähnen ist noch, dass die Vorrichtung vorzugsweise zumindest ein Klemmelement wie hierin offenbart aufweisen kann.

Zu erwähnen ist auch, dass die Temperierplatte vorzugsweise im Wesentlichen horizontal im Gehäuse und/oder im Kraftfahrzeug verbaut werden kann (z. B. mit einer Abweichung von maximal +/- 10° oder +/- 5° zur Horizontalen). Dabei ist es vorteilhaft möglich, dass das Klemmelement vorzugsweise zur Federung im Wesentlichen orthogonal zur Horizontalen dient.

Die zuvor beschriebenen bevorzugten Ausführungsformen und Merkmale der Offenbarung sind beliebig miteinander kombinierbar. Weitere Einzelheiten und Vorteile werden im Folgenden unter Bezug auf die beigefügten Zeichnungen beschrieben. Es zeigen:

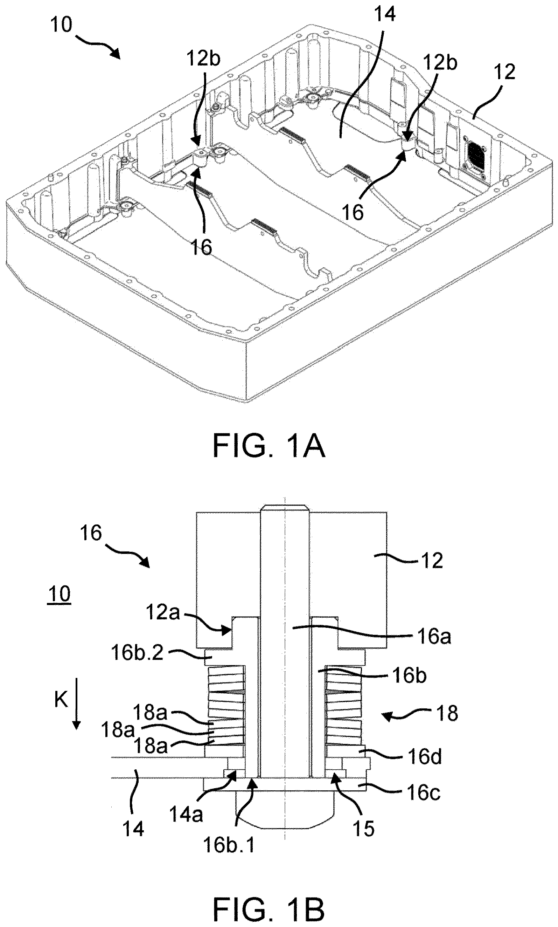

- Figur 1A: eine schematische Darstellung einer Vorrichtung zur Lagerung und Temperierung mehrerer Batteriezellen gemäß einer Ausführungsform;
- Figur 1: B eine Detaildarstellung einer Anbindungseinrichtung der Vorrichtung zur Lagerung und Temperierung mehrerer Batteriezellen gemäß einer Ausführungsform; und
- Figur 2: eine Detaildarstellung einer Anbindungseinrichtung der Vorrichtung zur Lagerung und Temperierung mehrerer Batteriezellen gemäß einer weiteren Ausführungsform.

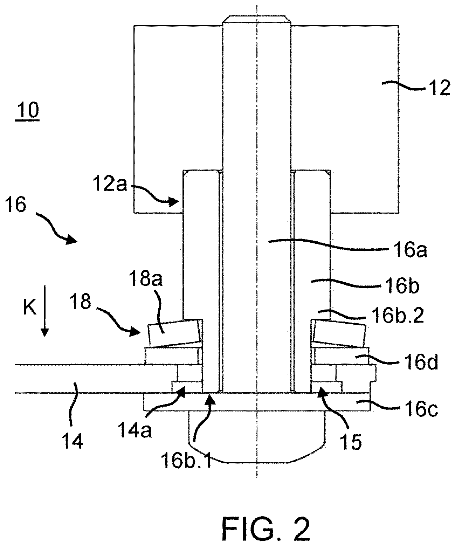

Die in den Figuren 1A, 1B und 2 gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die Figuren zeigen jeweils (zumindest ausschnittsweise) eine Vorrichtung 10 zur Lagerung und Temperierung mehrerer Batteriezellen. Die Vorrichtung 10 kann Teil eines elektrischen Energiespeichers (auch Batteriepack genannt) für ein Kraftfahrzeug (nicht gesondert dargestellt) sein. Der Energiespeicher kann bspw. als Traktionsbatterie elektrische Energie für mindestens eine elektrische Antriebseinheit zum Antreiben des Kraftfahrzeugs bereitstellen. Beispielsweise kann das Kraftfahrzeug mittels eines zentralen Elektroantriebs, mittels mehrerer Elektroradnabenantriebe oder mehrerer radnaher Elektroantriebe angetrieben sein.

Die Vorrichtung 10 weist ein Gehäuse 12, eine Temperierplatte 14, mindestens eine Anbindungseinrichtung 16 und ein Klemmelement 18 auf.

Das Gehäuse 12 (vgl. Figur 1A) kann dabei die Vorrichtung 10 nach Außen begrenzen. Das Gehäuse 12 kann entsprechend bspw. auch als Außengehäuse bezeichnet werden. In dem Gehäuse 12 können die Temperierplatte 16 und die mindestens eine Anbindungseinrichtung 18 angeordnet sein. Ferner können auch mehrere Batteriezellen (nicht dargestellt) in dem Gehäuse 12 angeordnet und/oder aufgenommen sein. Die vorgenannten Komponenten können mittels des Gehäuses 12 gegen Umwelteinflüsse (z. B. Feuchtigkeit) und/oder Beschädigungen geschützt sein.

Das Gehäuse 12 kann rahmenförmig, vorzugsweise mehreckrahmenförmig (z. B. rechteckrahmenförmig), sein. Bevorzugt ist das Gehäuse 12 vollständig umlaufend bzw. bildet einen geschlossenen, mehrseitigen (z. B. vierseitigen) Rahmen (vgl. z. B. Figur 1A). Das Gehäuse 12 kann z. B. aus einer Metalllegierung oder Kunststoff gefertigt sein.

Das Gehäuse 12 kann mindestens einen Vorsprung 12b aufweisen. Bevorzugt ragt der mindestens eine Vorsprung 12b von dem Gehäuse 12 in einen (vom Gehäuse 12 umschlossenen) Innenraum des Gehäuses 12 ab (vgl. z. B. Figur 1A). Der Vorsprung 12b kann bspw. nasenförmig sein. Der mindestens eine Vorsprung 12b kann zur Anbringung und/oder Anlage der mindestens einen Anbindungseinrichtung 16 dienen. Entsprechend kann der mindestens eine Vorsprung 12b eine Anlagefläche für die mindestens eine Anbindungseinrichtung 16 aufweisen. Bevorzugt ist die Anlagefläche dabei quer (z. B. senkrecht) zu einer Wandung des Gehäuses 12 orientiert, von der Vorsprung 12b abragt. Beispielsweise kann die Anlagefläche an einer Unterseite des mindestens einen Vorsprungs 12b angeordnet sein. Die Anlagefläche kann ferner eine Ausnehmung 12a und/oder ein Innengewinde aufweisen.

Die Vorrichtung 10 kann ferner einen, vorzugsweise plattenförmigen, Boden aufweisen (nicht dargestellt). Der Boden kann das Gehäuse 12 von unten abdecken.

Die Vorrichtung 10 kann ferner einen, vorzugsweise plattenförmigen, Deckel aufweisen (nicht dargestellt). Der Deckel kann das Gehäuse 12 von oben abdecken.

Die Temperierplatte 14 dient zur Temperierung der mehreren Batteriezellen. Die Temperierplatte 14 kann plattenförmig sein. Die Temperierplatte 14 kann z. B. eine flache und/oder flächige Form aufweisen. Beispielsweise kann die Temperierplatte 14 im Wesentlichen quaderförmig sein. Die Temperierplatte 14 kann sich jeweils im Wesentlichen entlang einer gesamten Länge und einer gesamten Breite des Gehäuses 12 erstrecken. Die Temperierplatte 14 kann sich zwischen zwei einander gegenüberliegenden Seitenwänden des Gehäuses 12 erstrecken. Die Temperierplatte 14 kann von einem, vorzugsweise flüssigen, Temperiermedium (z. B. Kühlwasser) durchströmbar sein. Hierzu kann die Temperierplatte 14 eine, z. B. mäanderförmige, Kanalstruktur zur Führung des Temperiermediums aufweisen. Auf der Temperierplatte 14 können die mehreren Batteriezellen positionierbar bzw. anordenbar sein. Beispielsweise können die mehreren Batteriezellen bodenseitig mit der Temperierplatte 14 verbunden bzw. verbindbar sein. Zur Verbesserung des thermischen Kontakts zwischen den mehreren Batteriezellen und der Temperierplatte 14 kann optional ein Lückenfüller (z. B. ein Gapfiller und/oder eine Wärmeleitpaste) zwischen den mehreren Batteriezellen und der Temperierplatte 14 angeordnet sein.

Die mindestens eine Anbindungseinrichtung 16 (siehe Detaildarstellungen der Figuren 1B und 2) verbindet das Gehäuse 12 und die Temperierplatte 14 miteinander. Entsprechend kann die mindestens eine Anbindungseinrichtung 16 zwischen dem Gehäuse 12 und der Temperierplatte 14 angeordnet sein. Die mindestens eine Anbindungseinrichtung 16 kann ein Verbindungselement 16a aufweisen, über das die Temperierplatte 14 an dem Gehäuse 12 angebunden sein kann. Wie beispielhaft dargestellt ist, kann es sich bei dem Verbindungselement 16a z. B. um eine Schraube handeln. Entsprechend kann die Anbindungseinrichtung 16 in diesem Zusammenhang auch als Verschraubungseinrichtung bezeichnet werden. Es ist jedoch auch möglich, dass das Verbindungselement 16 bspw. als ein Gewindestift mit einer (lösbaren) Mutter und/oder als ein Bolzen ausgebildet ist.

Die mindestens eine Anbindungseinrichtung 16 kann an dem mindestens einen Vorsprung 12b des Gehäuses 12 angeordnet sein. Entsprechend kann das Verbindungselement 16a zumindest abschnittsweise (z.B. an einem ersten Ende) in den mindestens einen Vorsprung 12b bzw. in dem Gehäuse 12 aufgenommen sein. Beispielsweise kann das Verbindungselement 16a abschnittsweise in ein bzw. das Innengewinde des mindestens einen Vorsprungs 12b bzw. des Gehäuses 12 eingeschraubt sein.

Die mindestens eine Anbindungseinrichtung 16 kann ferner eine Anschlaghülse 16b aufweisen. Das Verbindungselement 16a kann durch die Anschlaghülse 16b geführt sein und/oder sich durch die Anschlaghülse 16b erstrecken. Entsprechend kann das Verbindungselement 16a zumindest abschnittsweise in der Anschlaghülse 16b ausgenommen und/oder von der Anschlaghülse 16b zumindest abschnittsweise umgeben sein.

Die Anschlaghülse 16b kann ein erstes Ende und ein, vorzugsweise dem ersten Ende entgegengesetztes, zweites Ende aufweisen.

Das erste Ende der Anschlaghülse 16b kann in der Ausnehmung 12a des Gehäuses 12 bzw. des mindestens einen Vorsprungs 12b aufgenommen sein. Bevorzugt ist das erste Ende dabei zumindest abschnittsweise formschlüssig in der Ausnehmung 12a aufgenommen. Beispielsweise kann hierzu eine Innenkontur der Ausnehmung 12a zumindest abschnittsweise formangepasst zu einer Außenkontur des ersten Endes der Anschlaghülse 16b ausgebildet sein.

Das zweite Ende der Anschlaghülse 16b kann (z. B. stirnseitig) eine Anschlagfläche 16b.1 für das Verbindungselement 16a aufweisen. Das zweite Ende der Anschlaghülse 16b bzw. die Anschlagfläche 16b.1 kann somit einen Anschlag für das Verbindungselement 16a (z. B. einen Schraubenkopf des Verbindungselements 16a) bilden. Bevorzugt begrenzt die Anschlaghülse 16b damit eine vollständige Aufnahme des Verbindungselements 16a (bzw. eines Schafts des Verbindungselements 16a) im Gehäuse 12. Das Verbindungselement 16a kann sich an der Anschlagfläche 16b.1 direkt abstützen. Bevorzugt ist jedoch vorgesehen, dass zwischen der Anschlagsfläche 16b.1 und dem Verbindungselement 16a (z. B. dem Schraubenkopf des Verbindungselements 16a) eine (z. B. kreisringförmige) Zwischenringscheibe 16c angeordnet ist. Entsprechend kann sich in diesem Fall das Verbindungselement 16a mittelbar bzw. über die Zwischenringscheibe 16c an der Anschlagfläche 16b.1 abstützen. Die Zwischenringscheibe 16c kann bspw. zwischen dem Verbindungselement 16a (z. B. dessen Kopf) und der Anschlagfläche 16b.1 bzw. der Anschlaghülse 16b eingeklemmt sein. Ferner können sich das Verbindungselement 16a und/oder die Anschlaghülse 16b durch die Zwischenringscheibe 16c (z. B. durch eine zentrale Öffnung der Zwischenringscheibe 16c) erstrecken. Weiterhin kann die Zwischenringscheibe 16c auch mit der Temperierplatte 14 verbunden sein. Beispielsweise kann die Temperierplatte 14 zumindest abschnittsweise an der Zwischenringscheibe 16c (z. B. an deren Oberseite) anliegen und/oder zumindest abschnittsweise auf der Zwischenringscheibe 16c (z. B. auf deren Oberseite) aufliegen. Für eine thermische Entkopplung kann die Zwischenringscheibe 16c bevorzugt aus einem nicht metallischen und/oder thermisch nicht oder schlecht leitenden Material gefertigt sein. Beispielsweise kann die Zwischenringscheibe 16c aus Keramik und/oder einem faserverstärktem Kunststoff sein.

Das Verbindungselement 16a und/oder die Anschlaghülse 16b (z. B. deren zweites Ende) können sich hierbei durch eine Durchgangsöffnung 14a der Temperierplatte 14 erstrecken. Bevorzugt kann hierbei vorgesehen sein, dass zwischen einem Rand der Durchgangsöffnung 14a und einem sich durch die Durchgangsöffnung 14a erstreckenden Abschnitt des Verbindungselements 16a und/oder zwischen einem Rand der Durchgangsöffnung 14a und einem sich durch die Durchgangsöffnung 14a erstreckenden Abschnitt der Anschlaghülse 16b ein Freiraum 15 angeordnet ist. Wie im Folgenden noch eingehender beschrieben werden wird, kann dieser Freiraum 15 zur Kompensation thermischer Dimensionsänderungen der Temperierplatte 14 und/oder zum Abbau von Verspannungen an der mindestens einen Anbindungseinrichtung 16 dienen.

An der mindestens einen Anbindungseinrichtung 16 ist ferner ein (z. B. elastisches) Klemmelement 18 angeordnet. Beispielsweise kann das Klemmelement 18 das Verbindungselement 16a und/oder die Anschlaghülse 16b zumindest abschnittsweise umgeben. Entsprechend kann das Klemmelement 18 zwischen dem Gehäuse 12 und der Temperierplatte 14 und/oder zwischen der mindestens einen Anbindungseinrichtung 16 und der Temperierplatte 14 angeordnet sein. Bei dem Klemmelement 18 soll es sich bevorzugt um eine (mechanische) Federung handeln. Beispielsweise kann die Federung bzw. das Klemmelement 18 in Form mindestens einer Tellerfeder und/oder Schraubenfeder ausgebildet sein bzw. mindestens eine Tellerfeder und/oder Schraubenfeder aufweisen. Zudem oder alternativ kann das Klemmelement 18 auch als ein gummielastisches Bauteil (z. B. eine Gummifeder) ausgebildet sein bzw. ein gummielastisches Bauteil aufweisen.

Das Klemmelement 18 beaufschlagt dabei die Temperierplatte 14 (mittelbar oder unmittelbar) mit einer Klemmkraft. Bevorzugt verklemmt das Klemmelement 18 somit die Temperierplatte 14. Beispielsweise kann das Klemmelement 18 die Temperierplatte 14 gegen das Verbindungselement 16a (z. B. dessen Schraubenkopf) drücken. Das Verbindungselement 16a bzw. die mindestens eine Anbindungseinrichtung 16 selbst soll hingegen bevorzugt nicht unmittelbar zum Verklemmen der Temperierplatte 14 (im Hauptschluss) dienen. Die Temperierplatte 14 kann somit insgesamt federbelastet im Gehäuse 12 gelagert sein. Wie in den Figuren 1B und 2 dargestellt ist, kann die Anschlaghülse 16b (z. B. an deren ersten Ende) dazu einen, vorzugsweise umlaufenden, Absatz 16b.2 aufweisen. Der Absatz 16b.2 kann z. B. ringförmig ausgebildet sein. Der Absatz 16b.2 kann bzgl. einer Längsachse der Anschlaghülse 16b radial bzw. seitlich von der Anschlaghülse 16b abstehen. An dem Absatz 16b.2 kann das Klemmelement 18 abgestützt sein. Beispielsweise kann das Klemmelement 18 ein erstes Ende und ein, vorzugsweise dem ersten Ende entgegengesetztes, zweites Ende aufweisen, wobei vorzugsweise das erste Ende an dem Absatz 16b.2 anliegt. Das zweite Ende des Klemmelements 18 kann (direkt) an der Temperierplatte 14 anliegen. Bevorzugt ist zwischen dem zweiten Ende des Klemmelements 18 und der Temperierplatte 14 eine Unterlegscheibe 16d (z. B. aus Stahl) angeordnet. Die Unterlegscheibe 16d kann z. B. ein Einschneiden des Klemmelements 18 in die Temperierplatte 14 verhindern. Für eine thermische Entkopplung kann die Unterlegscheibe 16d bevorzugt aus einem nicht metallischen und/oder thermisch nicht oder schlecht leitenden Material gefertigt sein. Beispielsweise kann die Unterlegscheibe 16d aus Keramik und/oder einem faserverstärktem Kunststoff sein.

Das Klemmelement 18 kann das Verbindungselement 16a und/oder die Anschlaghülse 16b ferner zumindest abschnittsweise (z. B. umfangsseitig und/oder koaxial) umgeben. Beispielsweise kann das Klemmelement 18 eine zentrale Öffnung aufweisen, durch die sich das Verbindungselement 16a und/oder die Anschlaghülse 16b erstreckt. Wie beispielhaft in Figur 1B und 2 dargestellt ist, kann das Klemmelement 18 z. B. als eine oder mehrere Tellerfedern 18a ausgebildet sein, die jeweils ein mittiges Loch aufweisen, durch das sich das Verbindungselement 16a bzw. die Anschlaghülse 16b erstrecken kann. In einer bevorzugten Ausführungsform kann das Klemmelement 18 mehrere, z. B. neun, Tellerfedern 18a umfassen. Die mehreren Tellerfedern 18a können in mehreren, z. B. drei, Tellerfederpaketen gruppiert sein und/oder einen Tellefederstapel bilden. Wie in Figur 1B dargestellt, kann das Klemmelement und/oder der Tellerfederstapel 18 drei seriell angeordnete Tellerfederpakete umfassen, wobei jedes Tellerfederpaket drei parallel angeordnete Tellerfedern 18a umfasst. In Figur 2 sind die Tellerfederpakete von Figur 1B beispielhaft durch eine (in etwa doppelt so dicke) Tellerfeder 18a ersetzt. Bevorzugt ist diese so ausgelegt, dass sie bei Erreichen einer vorbestimmten Klemmkraft teilplastisch wird.

Das Klemmelement 18 kann weiterhin ausgebildet und/oder angeordnet sein, auf die Temperierplatte 14 eine Klemmkraft entlang einer Klemmrichtung K auszuüben, die parallel zu einer Längsachse des Verbindungselements 16a und/oder einer Längsachse der Anschlaghülse 16b orientiert ist. Die Temperierplatte 14 kann somit senkrecht zu einer Erstreckungsebene (bzw. Plattenebene) der Temperierplatte 14 verklemmt bzw. mit einer Klemmkraft beaufschlagt sein. Als Erstreckungsebene (bzw. Plattenebene) kann dabei diejenige Ebene verstanden werden, in der die Temperierplatte 14 ihre größte Ausdehnung besitzt. Die Erstreckungsebene kann bspw. eine Horizontalebene sein.

Das Klemmelement 18 kann ferner durch eine (z. B. senkrecht zu der Erstreckungsebene der Temperierplatte 14 wirkende) Krafteinwirkung zusammendrückbar sein. Beispielsweise kann das Klemmelement 18 durch die entsprechende Krafteinwirkung in eine abgeflachte Form überführbar sein. Hierdurch kann die klemmende Wirkung des Klemmelements 18 von der Temperierplatte 14 (zeitweise) überwunden werden. Bevorzugt wird dadurch ein Bewegen (z. B. ein Verrutschen) der Temperierplatte 16 relativ zum Gehäuse 12 ermöglicht. Das Bewegen kann dabei bevorzugt innerhalb einer Erstreckungsebene der Temperierplatte 14 bzw. quer zur Klemmrichtung K erfolgen. Das Bewegen kann durch den Freiraum 15 begrenzt sein.

Insgesamt kann durch die beschriebene Ausgestaltung über die mindestens eine Anbindungseinrichtung 16 eine sichere Anbindung der Temperierplatte 14 am Gehäuse 12 erreicht werden, wobei Verspannungen an der mindestens einen Anbindungseinrichtung 16 zuverlässig abgebaut werden können. Bevorzugt ist eine Klemmkraft des Klemmelements 18 dabei derart ausgelegt, dass die Temperierplatte 14 während Belastungen durch Schwingungen fest am Gehäuse 12 fixiert werden kann. Im Fall, dass sich die Temperierplatte 14, z. B. infolge von thermischen Dimensionsänderungen und/oder im Torsionsfall, an der mindestens einen Anbindungseinrichtung 16 verspannt, sollte die Klemmkraft des Klemmelements 18 vorzugsweise derart ausgelegt sein, dass ein kurzzeitiges Rutschen der Temperierplatte 14 zum Abbau der Verspannungen ermöglicht wird. Die Anbindungseinrichtung 16 kann somit insbesondere ausgebildet sein, thermische Dimensionsänderungen der Temperierplatte 14 (z. B. innerhalb der Erstreckungsebene der Temperierplatte 14) mittels des Klemmelements 18 zuzulassen. Bevorzugt arbeitet das Klemmelement 18 dabei rein in seinem elastischen Verformungsbereich.

Vorstehend wurde der Aufbau bzw. die Funktionsweise der Vorrichtung aus Gründen der Übersichtlichkeit vorrangig für den Fall mindestens einer Anbindungseinrichtung 16 bzw. mindestens eines Vorsprungs 12b beschrieben. Bevorzugt weist die mindestens eine Anbindungseinrichtung 16 jedoch mehrere, insbesondere fünf, Anbindungseinrichtungen 16 auf. Diese können bspw. verteilt, z. B. umfangsseitig verteilt, an der Temperierplatte 14 angeordnet sein. Entsprechend kann auch der mindestens eine Vorsprung 12b mehrere Vorsprünge 12b aufweisen, wobei jeweils einer der mehreren Vorsprünge 12b jeweils einem der mehreren Anbindungseinrichtungen 16 zugeordnet ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Vorrichtung
- 12: Gehäuse
- 12a: Ausnehmung
- 12b: Vorsprung
- 14: Temperierplatte
- 14a: Durchgangsöffnung
- 15: Freiraum
- 16: Anbindungseinrichtung
- 16a: Verbindungselement
- 16b: Anschlaghülse
- 16b.1: Anschlagfläche
- 16b.2: Absatz
- 16c: Zwischenringscheibe
- 16d: Unterlegscheibe
- 18: Klemmelement
- 18a: Tellerfeder
- K: Klemmrichtung

## Patentansprüche

1. Vorrichtung (10) zur Lagerung und Temperierung mehrerer Batteriezellen, aufweisend:
ein, vorzugsweise rahmenförmiges, Gehäuse (12) zur Aufnahme der mehreren Batteriezellen;
eine Temperierplatte (14) zur Temperierung der mehreren Batteriezellen; und
mindestens eine Anbindungseinrichtung (16), vorzugsweise Verschraubungseinrichtung, wobei die mindestens eine Anbindungseinrichtung (16) das Gehäuse (12) und die Temperierplatte (14) miteinander verbindet; und
ein, vorzugsweise elastisches, Klemmelement (18), das an der mindestens einen Anbindungseinrichtung (16) angeordnet ist und die Temperierplatte (14) mit einer, vorzugsweise vorbestimmten, Klemmkraft beaufschlagt.

2. Vorrichtung (10) nach Anspruch 1, wobei die Vorrichtung (10) ausgebildet ist:
mittels des Klemmelements (18) insbesondere thermische Dimensionsänderungenund/oder Torsion der Temperierplatte (14) zu kompensieren, vorzugsweise zum Abbau von Verspannungen der Temperierplatte (14); und/oder
mittels des Klemmelements (18) Bewegungen der Temperierplatte (14) innerhalb einer Erstreckungsebene der Temperierplatte (14) zuzulassen, vorzugsweise zum Abbau von Verspannungen der Temperierplatte (14).

3. Vorrichtung (10) nach Anspruch 1 oder 2, wobei:
das Klemmelement(18) die Temperierplatte (14) kraftschlüssig verklemmt, vorzugsweise zur Fixierung der Temperierplatte (14) am Gehäuse (12); und/oder
das Klemmelement (18) zwischen der Temperierplatte (14) und der mindestens eine Anbindungseinrichtung (16) eingespannt ist und/oder das Klemmelement (18) zwischen der Temperierplatte (14) und dem Gehäuse (12) eingespannt ist; und/oder
das Klemmelement (18) durch eine, vorzugsweise senkrecht zu einer Erstreckungsebene der Temperierplatte (14) wirkende, Krafteinwirkung zusammendrückbar ist, vorzugsweise zum Überwinden der Verklemmung und/oder zum Ermöglichen einer Bewegung der Temperierplatte (14) innerhalb einer Erstreckungsebene der Temperierplatte (14); und/oder
das Klemmelement (18) ausgebildet ist, bei einem Erreichen eines vorbestimmten Klemmkraftwerts, vorzugsweise reversibel, verformbar zu sein, vorzugsweise zum Reduzieren der Klemmkraft und/oder zum Ermöglichen einer Bewegung der Temperierplatte (14) innerhalb einer Erstreckungsebene der Temperierplatte (14).

4. Vorrichtung (10) nach einem der vorherigen Ansprüche, wobei das Klemmelement (18):
eine Federung umfasst; und/oder
vorgespannt ist; und/oder
zumindest eine Tellerfeder (18a) aufweist, wobei vorzugsweise:
die zumindest eine Tellerfeder mehrere Tellerfedern (18a) umfasst, die hintereinander und/oder parallel angeordnet sind und/oder einen Tellerfederstapel bilden.

5. Vorrichtung (10) nach einem der vorherigen Ansprüche, wobei:
die mindestens eine Anbindungseinrichtung (16) ein Verbindungselement (16a), vorzugsweise eine Schraube, aufweist und die Temperierplatte (14) über das Verbindungselement (16a) an dem Gehäuse (12) angebunden ist.

6. Vorrichtung (10) nach Anspruch 5, wobei:
das Verbindungselement (16a), vorzugsweise umfangsseitig und/oder koaxial, zumindest abschnittsweise von dem Klemmelement (18) umgeben ist; und/oder
das Klemmelement (18) die Temperierplatte (14) gegen das Verbindungselement (16a), vorzugsweise gegen einen Schraubenkopf des Verbindungselements (16a), drückt.

7. Vorrichtung (10) nach Anspruch 5 oder 6, wobei:
die Temperierplatte (14) eine Durchgangsöffnung (14a) aufweist, durch die sich das Verbindungselement (16a) erstreckt, wobei vorzugsweise:
zwischen einem Rand der Durchgangsöffnung (14a) und einem sich durch die Durchgangsöffnung (14a) erstreckenden Abschnitt des Verbindungselements (16a) ein Freiraum (15) angeordnet ist, vorzugsweise zur Kompensation thermischer Dimensionsänderungen und/oder Torsion der Temperierplatte (14).

8. Vorrichtung (10) nach einem der Ansprüche 5 bis 7, wobei:
das Klemmelement (18) ausgebildet ist, auf die Temperierplatte (14) die Klemmkraft entlang einer Klemmrichtung (K) auszuüben, die parallel zu einer Längsachse des Verbindungselements (16a) orientiert ist; und/oder
das Klemmelement(18) ausgebildet ist, bei einem Erreichen eines vorbestimmten Klemmkraftwerts teilplastisch verformbar zu sein.

9. Vorrichtung (10) nach einem der Ansprüche 5 bis 8, wobei:
die mindestens eine Anbindungseinrichtung (16) eine Anschlaghülse (16b) aufweist, durch die sich das Verbindungselement (16a) erstreckt und die, vorzugsweise stirnseitig, eine Anschlagfläche (16b.1) für das Verbindungselement (16a), vorzugsweise für einen Schraubenkopf des Verbindungselements (16a), aufweist.

10. Vorrichtung (10) nach Anspruch 9, wobei:
die mindestens eine Anbindungseinrichtung (16) eine Zwischenringscheibe (16c) aufweist, die zwischen dem Verbindungselement (16a) und der Anschlagsfläche (16b.1) angeordnet ist, und vorzugsweise an der Temperierplatte (14) anliegt; und/oder
die Anschlaghülse (16b) einen, vorzugsweise seitlich von der Hülse (16b) abragenden, Absatz (16b.2) aufweist, an dem sich das Klemmelement (18) abstützt.

11. Vorrichtung (10) nach Anspruch 9 oder 10, wobei:
die Anschlaghülse (16b), vorzugsweise umfangsseitig und/oder koaxial, zumindest abschnittsweise von dem Klemmelement (18) umgeben ist; und/oder
das Gehäuse (12) eine Ausnehmung (12a) aufweist, in der ein Endbereich der Anschlaghülse (16b) zumindest abschnittsweise formschlüssig aufgenommen ist.

12. Vorrichtung (10) nach einem der vorherigen Ansprüche, wobei:
die mindestens eine Anbindungseinrichtung (16) eine Unterlegscheibe (16d), vorzugsweise aus Stahl, aufweist, die zwischen dem Klemmelement (18) und der Temperierplatte (14) angeordnet ist, vorzugweise um ein Einschneiden des Klemmelements (18) in die Temperierplatte (14) zu verhindern; und/oder
die mindestens eine Anbindungseinrichtung (16) mehrere, vorzugsweise zumindest fünf, Anbindungseinrichtungen (16) aufweist,
wobei vorzugsweise die mehreren Anbindungseinrichtungen (16) verteilt an der Temperierplatte (14) angeordnet sind.

13. Vorrichtung (10) nach einem der vorherigen Ansprüche, wobei:
das Gehäuse (12) mindestens einen, vorzugsweise in einen Innenraum des Gehäuse (12) von dem Gehäuse (12) abragenden, Vorsprung (12b) aufweist, an dem sich die mindestens eine Anbindungseinrichtung (16) abstützt; und/oder
die Temperierplatte (14) eine, vorzugsweise mäanderförmige, Kanalstruktur zur Führung eines, vorzugsweise flüssigen, Temperiermediums aufweist.

14. Elektrischer Energiespeicher für ein Kraftfahrzeug, vorzugsweise Nutzfahrzeug, aufweisend:
mehrere Batteriezellen; und
eine Vorrichtung (10) nach einem der vorherigen Ansprüche, wobei die mehreren Batteriezellen in dem Gehäuse (12), vorzugsweise auf der Temperierplatte (16) stehend, aufgenommen sind.

15. Kraftfahrzeug, vorzugsweise Nutzfahrzeug, aufweisend:
einen elektrischen Energiespeicher nach Anspruche 14 und/oder eine Vorrichtung (10) nach einem der Ansprüche 1 bis 13.
